# EUROPEAN PATENT SPECIFICATION

(11) **EP 1 019 583 B1**
(45) Date of publication and mention of the grant of the patent: **26.11.2003**
(21) Application number: 98943906.2
(22) Date of filing: 08.09.1998
(51) Int. Cl.: E01F 9/011, E04H 12/02

(54) **A POLE**
PFAHL
POTEAU

(30) Priority: 08.09.1997 FI 973627; 19.12.1997 FI 974586; 02.02.1998 FI 980050 U
(43) Date of publication of application: 19.07.2000
(73) Proprietor: Jerol Industri AB, 815 22 Tierp (SE)
(72) Inventor: JERNSTRÖM, Rolf, FIN-10600 Ekenäs (FI)
(74) Representative: Laitinen, Pauli Sakari
(86) International application number: PCT/FI98/00697
(87) International publication number: WO 99/013162

(56) References cited:
- GB-A- 1 394 084
- US-A- 3 429 758
- US-A- 3 574 104
- US-A- 3 896 858
- US-A- 4 172 175
- US-A- 5 245 813

## Description

The present invention relates to a post, especially, but not exclusively, a post that can be used, for example, in traffic signs, streetlights, traffic lights and various signposts. Conventional power and telephone posts are naturally one large group forming an application

Posts for such purposes are manufactured from many different materials and are generally hollow for many reasons, such as saving material. Various kinds of metal post appear to be the most commonly used. Other alternatives include posts made from reinforced and other plastics. See for example US-A-3,574,104 or GB-A-1 394 084. Wooden posts are also in general use.

In certain circumstances, the weight of the post is a significant factor. Thus, the weight of metal and solid wooden posts is many times that necessary in the intended application. For example, reinforced plastic has been used in an attempt to reduce the weight problem. However, such posts have their own weaknesses, one example of which is shattering during a collision.

This invention is intended to create a post, which eliminates some of the above detriments of posts according to the state of the art to achieve a light and durable post for very many different applications.

The above and other benefits and advantages of this invention are achieved in the manner described as characteristic in the accompanying Claims.

The invention is next described by reference to the accompanying diagrammatic drawings, which illustrate some embodiments of the invention.

Thus:
Figure 1 shows a cross-section of one embodiment of a post according to the invention, and
Figure 2 shows a longitudinal section of the construction according to Figure 1, and
Figure 3 shows a partial cross-section according to Figure 2 of another embodiment.

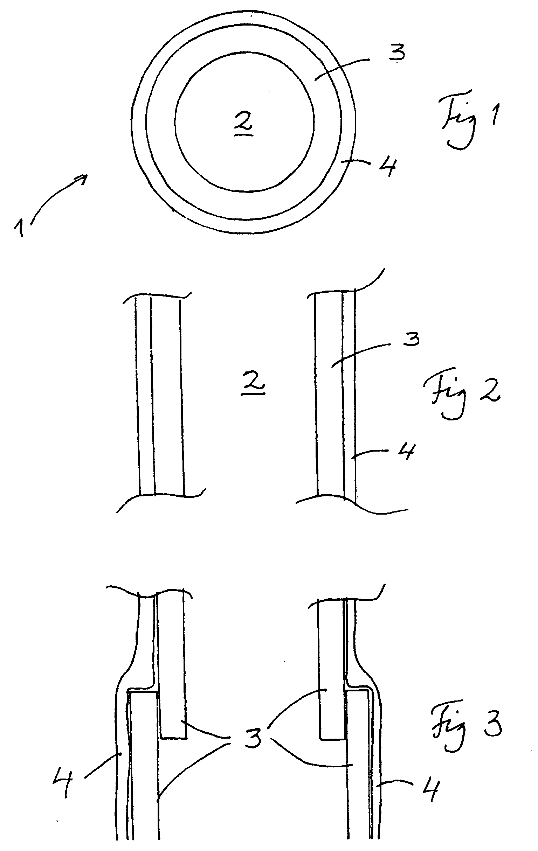

Thus, Figure 1 shows a non-scale diagram of the cross-section of a post 1 according to the invention. The post is specifically hollow, and so contains a longitudinal hollow core 2. The basic construction of the post is double, with an inner layer 3 and an outer layer 4. The thicknesses of these layers 3 and 4 may differ completely from to those shown in the figure.

According to the invention, layer 3 is of fibre-reinforced thermoset plastic and the outer layer 4 is of polyolefin plastic, for example, polythene. This kind of construction creates quite a light total structure, which, in addition to the strength given by the inner layer also has the property of a well protected construction, because the outer layer 4 forms a tight, protective layer on top of the inner layer. In a collision, for example, the protective layer protects against damage arising from the shattering of the inner layer, by preventing the shattered material from spreading into the environment with great force.

Figures 2 and 3 show two longitudinal sections with a construction according to the invention. In both constructions, polyofin plastic is used as the outer layer 4, the inner layer being of fibre-reinforced thermoset plastic. In the embodiment in Figure 2, the inner tube has a uniform tubular structure, while in Figure. 3, the construction is made of parts, as decribed later in greater detail. In both alternatives, the tube or tubes may be of uniform thickness or may especially narrow conically.

Thus, Figure 3 shows another embodiment, in which the inner tubular component is assembled from separate tubular part with two or more different diameters, which fit inside each other to form a post construction that narrows in steps. A unified polyolefin plastic layer 4 also covers the shoulders that are formed, for example, in the manner shown at the right-hand side of Figure 3, or more probably, as shown on the left-hand side of Figure 3, i.e. covering the shoulders very tightly.

It is obvious that the layers are drawn separately from each other only for clarity of illustration, as in reality layers 3 and 4 form a solid entity.

It is obvious that many different compositions of thermoset plastic may be used in the manufcture of the inner layer and also that many different kinds of reinforcing fibres may be used, Glass-fibre is the traditional fibre material, but nowadays there are also other very strong fibre materials on the market, such as Kevlar fibre and carbon fibre. From the point of view of the basic idea of the invention, it is clear that both the plastic materials and the fibre materials may be selected according to the intended application.

If necessary, a suitable glue-like or otherwise adgesive substance can be applied between the layers of a post construction according to the invention, which will particularly added between the layers, for example, during the same stage when the outer layer is extruded on top of the inner layer. The outer surface of the inner layer cna also be manufactured in a manner than improves adhesion, such as, for instance, roughening it or using finely crushed material from damaged posts.

All in all, a prefabricated post according to the invention will achieve an extremely useful and durable, but nevertheless light post and thus gain significant advantages over the posts in use at present. It has also properties that significantly increase its traffic safety.

## Claims

1. A post (1), which is especially a hollow, tube-like piece and which is particularly intended for use as posts for traffic lights, street lights, signposts or similar, and which is formed of two layers, the inner layer (3) being fibre-reinforced thermoset plastic, **characterized in that** the outer layer (4) is of polyolefin plastic.

2. A post according to claim 1, **characterized in that** the inner layer (3) contains glass fibres, kevlar fibres, carbon fibres or similar and the outer layer (4) is of polyethylene.

3. A post according to claim 1, **characterized in that** outer layer (4) is a unified and continuous layer.

4. A post according to claim 1, **characterized in that** there is an adhesive material, such as glue, between the layers (3, 4).

5. A post according to claim 1, **characterized in that** the outer surface of the inner layer (3) has roughened or prepared in another way to improve the grip.

## Patentansprüche

1. Pfahl (1), der insbesondere ein hohler, rohrförmiger Körper ist, und der speziell für den Einsatz als Pfahl für Verkehrsampeln, Straßenbeleuchtung, Signale und dergleichen vorgesehen ist, und der aus zwei Schichten gebildet ist, wobei die Innenschicht (3) aus Faser-verstärktem Duroplast besteht, die Außenschicht (4) aus Olefin-Kunststoff besteht.

2. Pfahl nach Anspruch 1, **dadurch gekennzeichnet, dass** die Innenschicht (3) Glasfasern, Kevlar-Fasern, Kohlenstofffasern oder dergleichen enthält und die Außenschicht (4) aus Polyethylen besteht.

3. Pfahl nach Anspruch 1, **dadurch gekennzeichnet, dass** die Außenschicht (4) eine vereinte und kontinuierliche Schicht ist.

4. Pfahl nach Anspruch 1, **dadurch gekennzeichnet, dass** es zwischen den Schichten (3, 4) ein Haftmaterial, wie etwa Klebstoff gibt.

5. Pfahl nach Anspruch 1, **dadurch gekennzeichnet, dass** die Außenfläche der Innenschicht (3) zur Verbesserung der Haftung aufgeraut oder sonst wie aufbereitet ist.

## Revendications

1. Poteau (1), qui est particulièrement une pièce creuse en forme de tube et qui est spécialement conçu pour être utilisé en tant que poteau pour les feux de signalisation, l'éclairage des rues, en tant que poteau indicateur ou similaire, et qui est formé de deux couches, la couche intérieure (3) étant du plastique thermodurci renforcé par fibres, la couche extérieure (4) est du plastique polyoléfinique.

2. Poteau selon la revendication 1, **caractérisé en ce que** la couche intérieure (3) contient des fibres de verre, des fibres Kevlar, des fibres de carbone ou similaire et la couche extérieure (4) est en polyéthylène.

3. Poteau selon la revendication 1, **caractérisé en ce que** la couche extérieure (4) est une couche unifiée et continue.

4. Poteau selon la revendication 1, **caractérisé en ce qu'**il y a une matière adhésive, telle la colle, entre les couches (3, 4).

5. Poteau selon la revendication 1, **caractérisé en ce que** la surface extérieure de la couche intérieure (3) a été grossièrement façonnée ou autrement préparée afin d'améliorer la prise.
